# EUROPEAN PATENT APPLICATION

(11) **EP 3 477 283 A1**
(43) Date of publication of application: **01.05.2019**
(21) Application number: 18200074.5
(22) Date of filing: 12.10.2018
(51) Int. Cl.: G01N 21/55

(54) **REFLECTION CHARACTERISTIC MEASUREMENT APPARATUS, MACHINING SYSTEM, REFLECTION CHARACTERISTIC MEASUREMENT METHOD, OBJECT MACHINING METHOD, AND NON-TRANSITORY COMPUTER-READABLE STORAGE MEDIUM**

(30) Priority: 31.10.2017 JP 2017211210
(71) Applicant: CANON KABUSHIKI KAISHA, Ohta-ku Tokyo 146-8501 (JP)
(72) Inventor: KASAI, Yusuke, Ohta-ku, Tokyo, 146-8501 (JP); KATO, Shigeki, Ohta-ku, Tokyo, 146-8501 (JP); UOZUMI, Takayuki, Ohta-ku, Tokyo, 146-8501 (JP)
(74) Representative: TBK

(57) **Abstract**

A two-dimensional intensity distribution representing intensity distributions of reflected light from an object surface in a reflection angle direction and an azimuth angle direction is acquired. A reflection characteristic of the object surface is obtained based on an intensity distribution in a predetermined direction different from the reflection angle direction in the two-dimensional intensity distribution.

## Description

### BACKGROUND OF THE INVENTION

### Field of the Invention

The present invention relates to a technique for measuring the reflection characteristic of an object surface.

### Description of the Related Art

The reflection characteristic of the surface (object surface) of an object such as a printed product, a coating, or a plastic material is an important factor associated with quality. Examples of the reflection characteristic of an object surface are indices such as a specular glossiness, a haze, and a DOI (Distinctness of Image or image clarity). In addition, not only these conventional indices complying with the domestic standards/international standards but also new indices that do not comply with the standards but are obtained by performing a unique calculation based on a measured BRDF or the like are calculated and output in many cases. Note that BRDF means Bidirectional Reflectance Distribution Function. Japanese Patent Laid-Open No. 2007-278949 discloses a technique capable of evaluating a reflection characteristic highly correlated with subjective glossy feeling to solve a problem that an objective evaluation value obtained by a conventional standard is poorly correlated with a subjective evaluation value.

In the technique disclosed in Japanese Patent Laid-Open No. 2007-278949, an evaluation parameter is extracted based on the variable angle reflected light distribution only in the reflection angle direction, and the evaluation target is assumed to be a high gloss (low scattering) sample. In recent years, evaluating a low gloss (high scattering) sample is also required. However, since the manner the reflected light diffuses changes between the low gloss (high scattering) sample and the high gloss (low scattering) sample, it is difficult to extract an evaluation parameter of high reliability usable to evaluate the reflection characteristic as the evaluation parameter for a low gloss (high scattering) sample by the conventional technique. For example, in a low gloss (high scattering) sample that has undergone emboss processing, the variable angle reflected light distribution in the reflection angle direction sometimes becomes almost flat. In this case, extraction of the evaluation parameter from the variable angle reflected light distribution is difficult.

### SUMMARY OF THE INVENTION

The present invention has been made in consideration of the above-described problem, and provides a technique for acquiring a reflection characteristic of higher reliability as the reflection characteristic of an object surface.

The present invention in its first aspect provides a reflection characteristic measurement apparatus as specified in claims 1 to 10.

The present invention in its second aspect provides a machining system as specified in claim 11.

The present invention in its third aspect provides a reflection characteristic measurement method as specified in claim 12.

The present invention in its fourth aspect provides a machining method as specified in claims 13 and 14.

The present invention in its fifth aspect provides a non-transitory computer-readable storage medium as specified in claim 15.

Further features of the present invention will become apparent from the following description of exemplary embodiments with reference to the attached drawings.

### BRIEF DESCRIPTION OF THE DRAWINGS

Fig. 1 is a view showing an example of the outer appearance of a reflection characteristic measurement apparatus;
Fig. 2 is a view showing an example of the internal arrangement of a reflection characteristic measurement apparatus 10 viewed from the side of a left side surface 11d;
Fig. 3 is a block diagram showing an example of the functional arrangement of the reflection characteristic measurement apparatus 10;
Fig. 4 is a flowchart of measurement processing of the reflection characteristic of an object surface 20;
Figs. 5A to 5C are views showing examples of a two-dimensional intensity distribution, a two-dimensional element array, and a variable angle reflected light distribution;
Figs. 6A to 6C are views showing examples of a two-dimensional intensity distribution, a two-dimensional element array, and a variable angle reflected light distribution; and
Fig. 7 is a block diagram showing an example of the arrangement of a system.

### DESCRIPTION OF THE EMBODIMENTS

The embodiments of the present invention will now be described with reference to the accompanying drawings. Note that the embodiments to be described below are examples of detailed implementation of the present invention or detailed examples of the arrangement described in the appended claims.

### [First Embodiment]

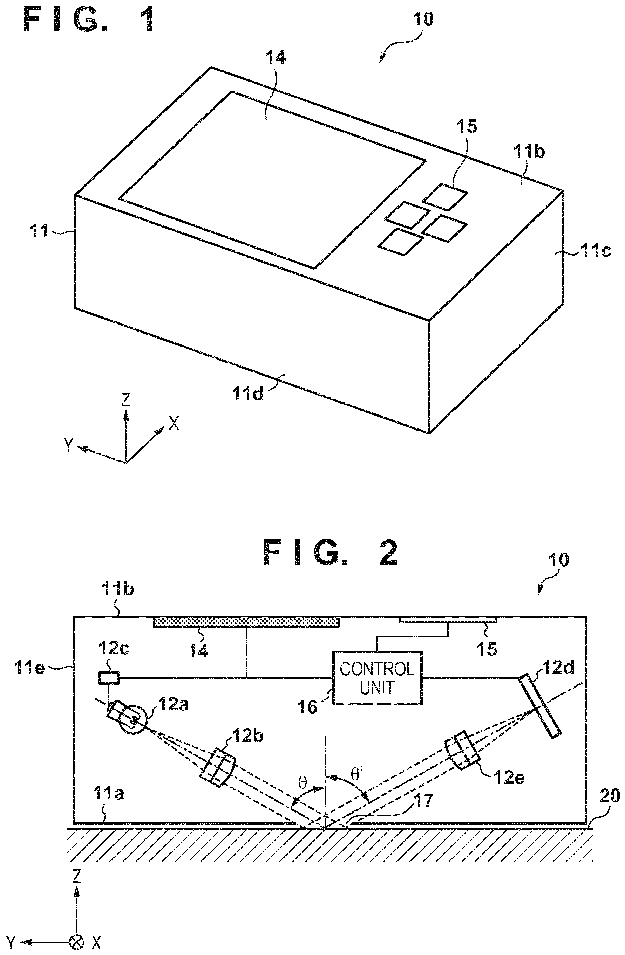

An example of the outer appearance of a reflection characteristic measurement apparatus according to this embodiment will be described first with reference to Fig. 1. As shown in Fig. 1, a housing 11 of a reflection characteristic measurement apparatus 10 according to this embodiment has an almost rectangular parallelepiped shape. A display unit 14 such as an LCD and an operation unit 15 including a button group are provided on an upper surface 11b of the housing 11. As shown in Fig. 1, the upper surface 11b and a lower surface (indicated by 11a in Fig. 2) facing the upper surface 11b are almost parallel to the x-y plane, and a left side surface 11d and a right side surface (not shown) facing the left side surface 11d are almost parallel to the z-y plane. Note that in Fig. 1, the positive direction of the X-axis is defined as a direction from the left side surface 11d to the right side surface in parallel to the upper side (lower side) of the upper surface 11b. In addition, a lower side surface 11c of the housing 11 and an upper side surface (indicated by 11e in Fig. 2) facing the lower side surface 11c are almost parallel to the z-x plane.

An example of the internal arrangement of the reflection characteristic measurement apparatus 10 (an example of the arrangement of the device stored in the housing 11) viewed from the side of the left side surface 11d will be described with reference to Fig. 2. As described above, the display unit 14 and the operation unit 15 are attached to the upper surface 11b of the housing 11.

A control unit 16 includes a processor such as an MCU (Micro Controller Unit), and a memory that holds data and a computer program to be executed by the processor. The processor executes processing using the computer program and data stored in the memory, thereby controlling the operation of the entire reflection characteristic measurement apparatus 10 and also executing or controlling each processing to be described later as processing performed by the reflection characteristic measurement apparatus 10. Note that the control unit 16 may include a DSP (Digital Signal Processor) or an FPGA (FieldProgrammable Gate Array) in place of or in addition to the processor such as an MCU.

The control unit 16 not only executes display control of the display unit 14 and processing according to an instruction from the operation unit 15 but also controls the operations of a light source control circuit 12c, a light source 12a, and a sensor 12d (light receiving unit) to measure the reflection characteristic of a measurement target (an object surface 20 in Fig. 2).

When measuring the reflection characteristic of the object surface 20 using the reflection characteristic measurement apparatus 10, the user places the reflection characteristic measurement apparatus 10 on the object surface 20 such that the lower surface 11a of the housing 11 comes into contact with the object surface 20. The user then operates the operation unit 15 to input a measurement start instruction. Upon detecting the measurement start instruction, the control unit 16 controls the light source control circuit 12c to make the light source 12a emit incident light. The light emitting intensity of the light source 12a is controlled by the light source control circuit 12c. The incident light is converted into parallel light by a lens 12b, reaches the object surface 20 via an opening portion 17 provided in the lower surface 11a, and is reflected as reflected light by the object surface 20. The reflected light passes through a lens 12e and enters the sensor 12d. Since Fig. 2 shows a state in which regular reflected light of the incident light enters the sensor 12d via the lens 12e, the reflected light enters one point on the sensor 12d. In fact, the incident light that reaches the object surface 20 via the opening portion 17 is reflected by the object surface 20 in various directions. Hence, not only the regular reflected light but also non-regular reflected light enters the lens 12e. Each of the regular reflected light and the non-regular reflected light, which have passed through the lens 12e, enters a position on the sensor 12d corresponding to the reflection angle and the azimuth angle from the point of incidence of the incident light (a point at which the incident light is reflected on the object surface 20). The sensor 12d is an area sensor formed by a CCD or a CMOS in which photoelectric conversion elements are two-dimensionally arrayed, and each photoelectric conversion element outputs a value (element value) corresponding to the intensity of the light that has entered the photoelectric conversion element. That is, the sensor 12d outputs a two-dimensional array (two-dimensional element array) of element values. The two-dimensional element array is information representing a so-called two-dimensional intensity distribution (two-dimensional BRDF) representing the intensity distributions in the reflection angle direction and the azimuth angle direction of reflected light from the object surface 20. That is, each horizontal line of the two-dimensional element array represents "the one-dimensional intensity distribution in the azimuth angle direction" of reflected light from the object surface 20 (in correspondence with each reflection angle). In addition, each vertical line of the two-dimensional element array represents "the one-dimensional intensity distribution in the reflection angle direction" of reflected light from the object surface 20 (in correspondence with each azimuth angle direction). Here, the azimuth angle of reflected light is an angle made by, for example, a projected straight line obtained by projecting a straight line connecting the point of incidence of the incident light from the light source 12a and the center position of the sensor 12d onto the object surface 20 and a projected straight line obtained by projecting a straight line representing the reflected light onto the object surface 20.

In addition, the reflection angle direction is a direction in a plane including the direction of incidence or the direction of emission of light to the object surface (subject surface) and the normal line of the object surface. Here, the direction of incidence is the direction of the center beam of incident light to the object surface or a light beam passing through the center of the light emitting surface and the center of the optical system or the center of the diaphragm. In addition, the direction of emission is the direction in which the light beam passing on a straight line defined by the direction of incidence propagates after reflected by the object surface, in other words, the propagation direction of light regularly reflected by the object surface. In addition, the azimuth angle direction is a direction in a plane orthogonal to the plane including the direction of incidence or the direction of emission of light to the object surface (subject surface) and the normal line of the object surface.

The control unit 16 obtains the reflection characteristic of the object surface 20 based on one or more horizontal lines of the two-dimensional element array output from the sensor 12d, that is, one or more one-dimensional intensity distributions in the azimuth angle direction. As the reflection characteristic, a unique index value may be obtained, or an existing standard index value such as a specular glossiness, a haze, and a DOI may be obtained. In this embodiment, any information associated with the reflection characteristic of the object surface 20 can be obtained. In addition, the horizontal lines of the two-dimensional element array output from the sensor 12d, that is, the one-dimensional intensity distributions in the azimuth angle direction themselves may be used as the reflection characteristic.

In this way, the reflection characteristic measurement apparatus 10 according to this embodiment collects the two-dimensional intensity distribution of the reflected light from the object surface 20 in a state in which external light is shielded by the housing 11, and obtains the reflection characteristic of the object surface 20 based on the one-dimensional intensity distributions in the azimuth angle direction in the two-dimensional element array.

The control unit 16 then displays information concerning the obtained reflection characteristic on the display unit 14. The display form of the information concerning the obtained reflection characteristic is not limited to a specific display form. For example, when a glossiness is obtained as the reflection characteristic, the glossiness may be displayed as a numerical value, or an image corresponding to the glossiness may be displayed. The color, size, or the like of the image or character to be displayed may be changed in accordance with the glossiness. This allows the user to visually recognize the reflection characteristic of the object surface 20 by viewing the display unit 14. In addition, various pieces of setting information such as a measurement condition of the reflection characteristic measurement apparatus 10 can be displayed on the display unit 14. The user can set/adjust the setting information by operating the operation unit 15 while viewing the display unit 14 and confirming the setting information.

Here, as shown in Fig. 2, let θ be the angle of incidence (the angle made by an axis perpendicular to the object surface 20 and the reflected light) of incident light (parallel light) that reaches from the light source 12a to the object surface 20 via the lens 12b and the opening portion 17. At this time, the reflection angle (the angle made by an axis perpendicular to the object surface 20 and the reflected light) of the regular reflected light is also represented by θ (represented by θ' in Fig. 2 to prevent confusion). The angle θ of incidence is defined for each reflection characteristic in accordance with a standard such as JIS or ISO. For example, when measuring the specular glossiness as the reflection characteristic, the angle θ of incidence (reflection angle θ') is defined to one of 20°, 45°, 60°, 75°, and 85°. In addition, when measuring the haze as the reflection characteristic, the angle θ of incidence (reflection angle θ') is defined to one of 20° and 30°. When measuring the DOI (image clarity) as the reflection characteristic, the angle θ of incidence (reflection angle θ') is defined to one of 20°, 30°, 45°, and 60°.

In this embodiment, as shown in Fig. 2, the reflection characteristic measurement apparatus 10 includes one device set including the light source control circuit 12c, the light source 12a, the lens 12b, the lens 12e, and the sensor 12d to obtain a reflection characteristic corresponding to one angle θ of incidence. However, the angle θ of incidence (reflection angle θ') is defined for each standard of the reflection characteristic, as described above. Hence, to enable measurement of reflection characteristics corresponding to a plurality of angles θ of incidence (reflection angles θ'), a plurality of device sets for angles θ of incidence (reflection angles θ') different from each other may be mounted in the reflection characteristic measurement apparatus 10. For example, a device set in which the angle θ of incidence (reflection angle θ') is 20° and a device set in which the angle θ of incidence (reflection angle θ') is 60° are mounted in the reflection characteristic measurement apparatus 10 and used, all the specular glossiness, the haze, and the DOI can be measured. Alternatively, instead of mounting a plurality of device sets in the reflection characteristic measurement apparatus 10, one device set may be mounted in the reflection characteristic measurement apparatus 10, and a driving unit capable of changing the angle θ of incidence (reflection angle θ') of the device set may be mounted in the reflection characteristic measurement apparatus 10.

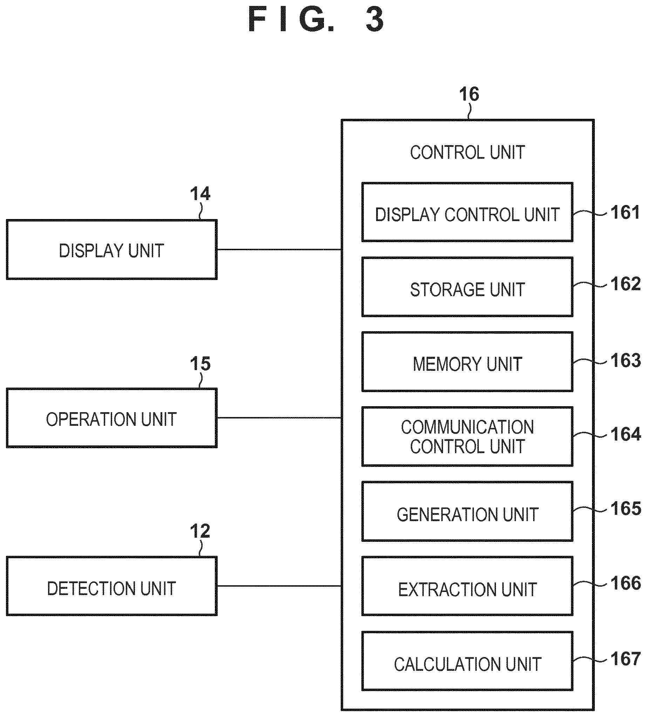

An example of the functional arrangement of the reflection characteristic measurement apparatus 10 according to this embodiment will be described next with reference to the block diagram of Fig. 3. A detection unit 12 is connected to the control unit 16 in addition to the display unit 14 and the operation unit 15 described above. The detection unit 12 includes the light source control circuit 12c, the light source 12a, the lens 12b, the lens 12e, and the sensor 12d shown in Fig. 2, and acquires a two-dimensional element array that is information representing the two-dimensional intensity distribution of reflected light from the object surface 20.

A display control unit 161 performs display control to cause the display unit 14 to display information concerning the reflection characteristic. A communication control unit 164 performs communication control to cause the reflection characteristic measurement apparatus 10 to perform data communication with another device. For example, the communication control unit 164 transmits information (for example, the above-described two-dimensional element array) acquired in the reflection characteristic measurement apparatus 10 or information (for example, the reflection characteristic of the object surface 20) obtained in the reflection characteristic measurement apparatus 10 to an external device. The communication with the external device may be wireless communication or may be wired communication. In addition, the communication control unit 164 can acquire information transmitted from the external device. For example, the communication control unit 164 can receive a reflection characteristic obtained by another reflection characteristic measurement apparatus from the reflection characteristic measurement apparatus. In this case, for example, the display unit 14 can comparably display reflection characteristics measured on the same object surface 20 by the self-apparatus and another apparatus.

A generation unit 165 obtains the one-dimensional intensity distribution in the azimuth angle direction based on one or more horizontal lines of the two-dimensional element array output from the detection unit 12 (sensor 12d). An extraction unit 166 obtains an evaluation parameter from the one-dimensional intensity distribution obtained by the generation unit 165. A calculation (obtaining) unit 167 obtains the reflection characteristic of the object surface 20 from the evaluation parameter obtained by the extraction unit 166.

A storage unit 162 is a memory configured to store information acquired as information to be saved, such as the above-described setting information and the reflection characteristic obtained by the calculation unit 167. A memory unit 163 includes a work area used when the display control unit 161, the communication control unit 164, the generation unit 165, the extraction unit 166, and the calculation unit 167 execute various kind of processing.

Note that the display control unit 161, the communication control unit 164, the generation unit 165, the extraction unit 166, and the calculation unit (obtaining unit) 167 may be implemented by hardware as the functional units of the above-described processor such as an MPU or may be implemented by software (computer program). In the latter case, when the software is stored in the storage unit 162, and the above-described processor such as an MCU loads the software into the memory unit 163 and executes it, the function of the corresponding functional unit can be implemented.

Note that the reflection characteristic measurement apparatus 10 need not always include all the functional units shown in Figs. 1 to 3 and, for example, the display unit 14, the operation unit 15, the storage unit 162, and the like may be attached as external devices to the reflection characteristic measurement apparatus 10. In addition, the components shown in Figs. 2 and 3 are main components associated with this embodiment, and not all the components of the reflection characteristic measurement apparatus 10 are shown. For example, the reflection characteristic measurement apparatus 10 may include a power button, an internal battery, the connector of a USB cable for power supply and communication, and the like in addition to the components shown in Figs. 2 and 3.

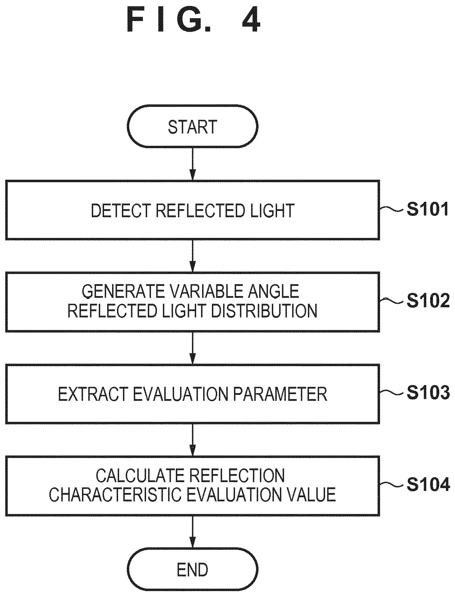

Measurement processing of the reflection characteristic of the object surface 20 by the reflection characteristic measurement apparatus 10 will be described next with reference to the flowchart of Fig. 4. Processing according to the flowchart of Fig. 4 is processing performed after the light source 12a emits incident light.

In step S101, each photoelectric conversion element of the sensor 12d outputs a value (element value) according to the intensity of reflected light that has entered the photoelectric conversion element. Accordingly, a two-dimensional element array that is a two-dimensional array of element values is output from the sensor 12d. Note that in step S101, a wider two-dimensional element array may be acquired by receiving reflected light in a wider range while moving the sensor 12d using a goniophotometer or the like.

In step S102, the generation unit 165 obtains the one-dimensional intensity distribution (variable angle reflected light distribution) in the azimuth angle direction from one or more horizontal lines of the two-dimensional element array output from the sensor 12d in step S101. Various methods exist as the method of obtaining the one-dimensional intensity distribution in the azimuth angle direction from one or more horizontal lines of the two-dimensional element array. In this embodiment, the method is not limited to a specified method.

For example, the generation unit 165 may acquire an element value array on one arbitrary horizontal line (for example, the horizontal line at the center or one horizontal line near the center) of the two-dimensional element array as "the variable angle reflected light distribution in the azimuth angle direction". Alternatively, the sensor 12d may be installed as a line sensor in the azimuth angle direction, thereby implementing acquisition of "the variable angle reflected light distribution in the azimuth angle direction". Otherwise, this may be implemented by installing a plurality of sensors 12d as photodiodes arranged in the azimuth angle direction.

Alternatively, for example, the generation unit 165 may acquire the average of the element value arrays of the horizontal lines of the two-dimensional element array as "the variable angle reflected light distribution in the azimuth angle direction". For example, for each vertical line of the two-dimensional element array, the generation unit 165 obtains the average value of the element values of the elements that form the vertical line. Then, the generation unit 165 may acquire an element value array having the average value obtained for the Nth (1 ≤ N ≤ M, M is the number of vertical lines) vertical line from the left end of the two-dimensional element array as the Nth element value from the left end as "the variable angle reflected light distribution in the azimuth angle direction".

Alternatively, for example, the generation unit 165 may acquire the sum of the element value arrays of the horizontal lines of the two-dimensional element array as the "the variable angle reflected light distribution in the azimuth angle direction". For example, for each vertical line of the two-dimensional element array, the generation unit 165 obtains the sum of the element values of the elements that form the vertical line. Then, the generation unit 165 may acquire an element value array having the sum obtained for the Nth (1 ≤ N ≤ M, M is the number of vertical lines) vertical line from the left end of the two-dimensional element array as the Nth element value from the left end as "the variable angle reflected light distribution in the azimuth angle direction".

When obtaining the above-described average value or sum, the above-described average value or sum may be obtained using every other L (L is an integer of 1 or more) vertical lines, instead of using all vertical lines. Alternatively, the weighted average of element values may be obtained for each vertical line by, for example, adding a large weight to the center of the two-dimensional element array.

In step S103, the extraction unit 166 obtains an evaluation parameter based on the variable angle reflected light distribution obtained by the generation unit 165 in step S102. The variable angle reflected light distribution obtained in step S102 is not a continuous function but discrete. Hence, for example, the extraction unit 166 performs fitting processing such as Gaussian fitting for the variable angle reflected light distribution, thereby obtaining a continuous function (for example, a Gaussian function) that approximates the shape of the variable angle reflected light distribution. Then, the extraction unit 166 obtains the standard deviation or FWHM (full width at half maximum) of the obtained continuous function as an evaluation parameter. The continuous function that approximates the shape of the variable angle reflected light distribution may be acquired using interpolating processing in addition to the fitting processing. Alternatively, the above-described evaluation parameter may be acquired from the variable angle reflected light distribution without obtaining the continuous function that approximates the shape of the variable angle reflected light distribution. In addition, the evaluation parameter is not limited to the standard deviation or FWHM (full width at half maximum). For example, the evaluation parameter may be a peak value of the continuous function (variable angle reflected light distribution), may be the light intensity of regular reflected light or nearby reflected light in the continuous function (variable angle reflected light distribution), or may be a differential value at an arbitrary position of the continuous function (variable angle reflected light distribution).

In step S104, the calculation unit 167 obtains the reflection characteristic (reflection characteristic evaluation value) of the object surface 20 from the evaluation parameter obtained by the extraction unit 166 in step S103 (calculation). For example, the value of the evaluation parameter may be obtained directly as the reflection characteristic of the object surface 20, or a result obtained by multiplying the value of the evaluation parameter by a constant or adding an offset may be obtained as the reflection characteristic of the object surface 20. The reciprocal of the value of the evaluation parameter or a logarithm calculation result may be obtained as the reflection characteristic of the object surface 20. A combination of these values may be obtained as the reflection characteristic of the object surface 20. Even in a case in which there are a plurality of evaluation parameters, the calculation may similarly be performed to calculate one reflection characteristic evaluation value or calculate a plurality of reflection characteristic evaluation values. As described above, various methods exist as the method of deriving the reflection characteristic of the object surface 20 from the evaluation parameter. In this embodiment, any method can be employed. The display control unit 161 displays, on the display unit 14, information concerning the reflection characteristic of the object surface 20 obtained by the calculation unit 167.

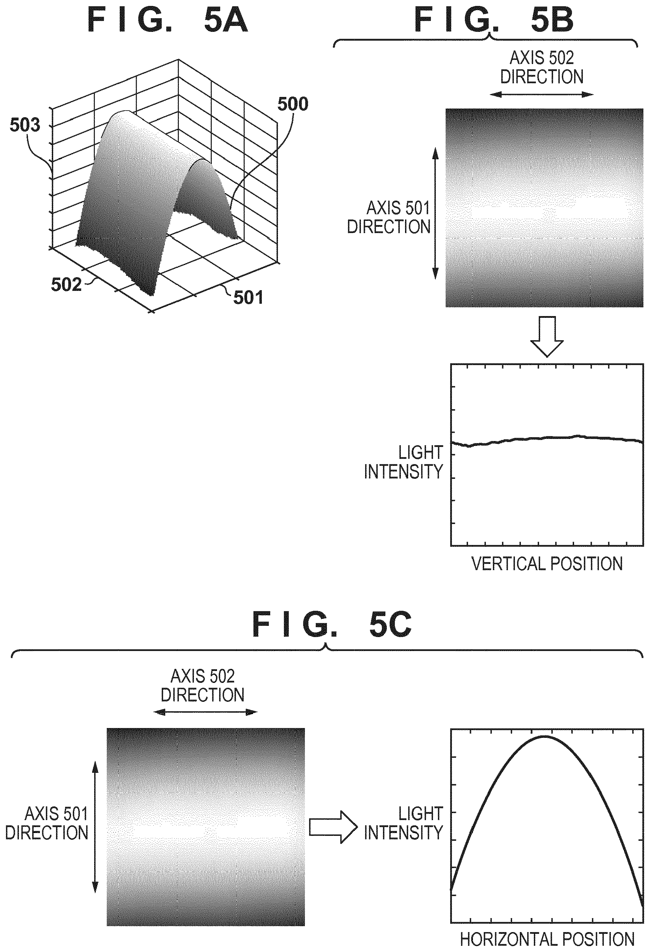

Fig. 5A shows an example of a two-dimensional intensity distribution represented by a two-dimensional element array based on reflected light from the object surface 20 in a case in which the object surface 20 is a low gloss (high scattering) sample that has undergone emboss processing. In Fig. 5A, an axis 501 represents the position of each element of the two-dimensional element array in the horizontal direction, an axis 502 represents the position of each element of the two-dimensional element array in the vertical direction, and an axis 503 represents an element value (= light intensity). In Fig. 5A, reference numeral 500 denotes "a two-dimensional intensity distribution representing the intensity distributions of the reflected light from the object surface 20 in the reflection angle direction and the azimuth angle direction", which is represented by a point group obtained by plotting the element values of the elements at the element positions of the two-dimensional element array. As shown in Fig. 5A, in the two-dimensional intensity distribution 500, the light intensity rarely changes in the direction along the axis 502. However, in the direction along the axis 501, the light intensity becomes higher at an element position corresponding to an azimuth angle closer to the azimuth angle of regular reflected light. Each of the two-dimensional element arrays shown on the upper side of Fig. 5B and on the left side of Fig. 5C is a two-dimensional element array representing the two-dimensional intensity distribution 500 shown in Fig. 5A. A whiter portion represents a portion of a higher light intensity, and a blacker portion represents a portion of a lower light intensity.

Conventionally, an evaluation parameter is obtained from a variable angle reflected light distribution (the variable angle reflected light distribution in the reflection angle direction) represented by the element value array of the vertical lines of such a two-dimensional element array. However, the variable angle reflected light distribution in the reflection angle direction collected from the two-dimensional element array on the upper side of Fig. 5B is almost flat, as shown on the lower side of Fig. 5B. It is difficult to obtain a reliable evaluation parameter from such a variable angle reflected light distribution. Here, on the lower side of Fig. 5B, the abscissa represents the position of each element of the two-dimensional element array in the vertical direction, and the ordinate represents the light intensity.

From this regard, in this embodiment, the variable angle reflected light distribution (the variable angle reflected light distribution in the azimuth angle direction) represented by the element value array of the horizontal lines of such a two-dimensional element array is used to calculate the evaluation parameter. The variable angle reflected light distribution in the azimuth angle direction is not flat, as shown on the right side of Fig. 5C. It is therefore possible to extract an evaluation parameter such as the above-described standard deviation or FWHM (full width at half maximum) from the variable angle reflected light distribution and obtain an evaluation parameter of reliability higher than before. Here, in Fig. 5C, the abscissa represents the position of each element of the two-dimensional element array in the horizontal direction, and the ordinate represents the light intensity.

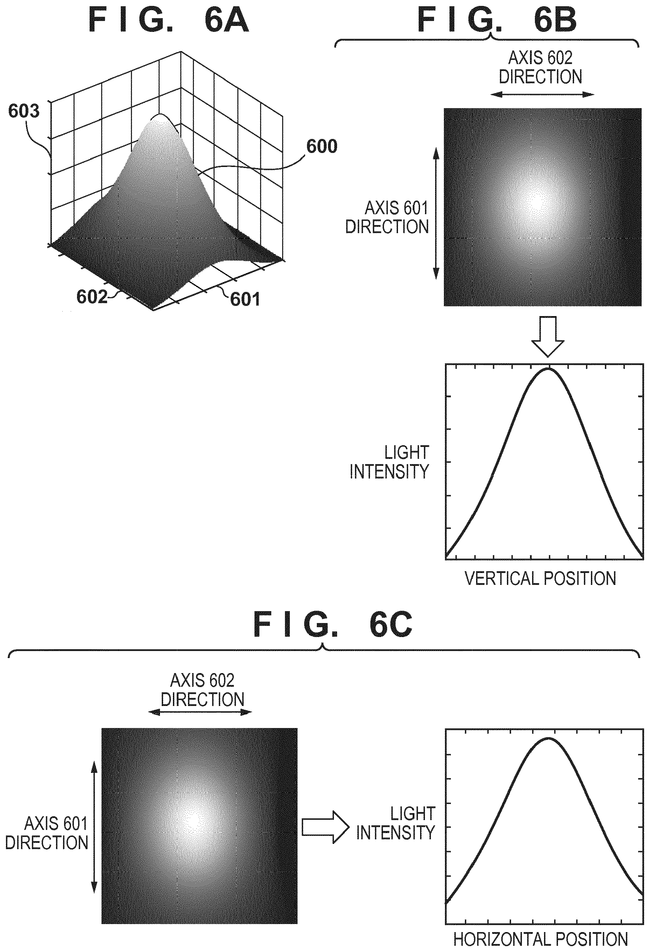

As described above, according to this embodiment, even if the object surface 20 is a low gloss (high scattering) sample, an evaluation parameter of reliability higher than before can be obtained. As a result, it is possible to acquire a reflection characteristic of reliability higher than before. Note that the measurement method of the reflection characteristic of the object surface 20 according to this embodiment is applicable even if the object surface 20 is a high gloss (low scattering) sample. This point will be described with reference to Figs. 6A to 6C.

Fig. 6A shows an example of a two-dimensional intensity distribution represented by a two-dimensional element array based on reflected light from the object surface 20 in a case in which the object surface 20 is a high gloss (low scattering) sample. In Fig. 6A, an axis 601 represents the position of each element of the two-dimensional element array in the horizontal direction, an axis 602 represents the position of each element of the two-dimensional element array in the vertical direction, and an axis 603 represents an element value (= light intensity). In Fig. 6A, reference numeral 600 denotes "a two-dimensional intensity distribution representing the intensity distributions of the reflected light from the object surface 20 in the reflection angle direction and the azimuth angle direction", which is represented by a point group obtained by plotting the element values of the elements at the element positions of the two-dimensional element array. As shown in Fig. 6A, in the direction along the axis 601 in the two-dimensional intensity distribution 600, the light intensity becomes higher at an element position corresponding to an azimuth angle closer to the azimuth angle of regular reflected light. Additionally, in the direction along the axis 602 in the two-dimensional intensity distribution 600, the light intensity becomes higher at an element position corresponding to a reflection angle closer to the reflection angle of regular reflected light. Each of the two-dimensional element arrays shown on the upper side of Fig. 6B and on the left side of Fig. 6C is a two-dimensional element array representing the two-dimensional intensity distribution 600 shown in Fig. 6A. A whiter portion represents a portion of a higher light intensity, and a blacker portion represents a portion of a lower light intensity.

In the two-dimensional element array based on the reflected light from the high gloss (low scattering) sample, the variable angle reflected light distribution (the variable angle reflected light distribution in the reflection angle direction) represented by the element value array of the vertical lines is not flat, as shown on the lower side of Fig. 6B. Additionally, in the two-dimensional element array based on the reflected light from the high gloss (low scattering) sample, the variable angle reflected light distribution (the variable angle reflected light distribution in the azimuth angle direction) represented by the element value array of the horizontal lines is not flat, as shown on the right side of Fig. 6C. Hence, even if the object surface 20 is a high gloss (low scattering) sample, a reliable reflection characteristic can be obtained from the variable angle reflected light distribution (the variable angle reflected light distribution in the azimuth angle direction) represented by the element value array of the horizontal lines of the two-dimensional element array.

### <Modification>

The order of the processing steps shown in Fig. 4 is not limited to the order shown in Fig. 4. For example, the order may be reversed in accordance with the contents of the processing steps, a processing step may be omitted, one processing step may be divided into a plurality of processing steps, or a plurality of processing steps may be integrated into one processing step. In addition, a processing step may be performed in parallel to another processing step.

In addition, a plurality of processing units may be provided as the control unit 16, and various kinds of processing including the processing of obtaining the reflection characteristic of the object surface 20 may be shared by the plurality of processing units. Furthermore, in the first embodiment, the housing 11 of the reflection characteristic measurement apparatus 10 has an almost rectangular parallelepiped shape. However, the shape of the housing 11 of the reflection characteristic measurement apparatus 10 is not limited to the almost rectangular parallelepiped shape.

In addition, in the first embodiment, the reflection characteristic of the object surface 20 and the like are notified to the user by display. However, the notification method is not limited to display. A notification may be made by a sound, or a notification may be made by both display and a sound.

### [Second Embodiment]

In the following embodiments and modifications including this embodiment, differences from the first embodiment will be explained, and the rest is assumed to be the same as in the first embodiment unless it is specifically stated otherwise. In this embodiment, an evaluation parameter P1 is obtained even from a variable angle reflected light distribution in the reflection angle direction, and an evaluation parameter P3 is obtained by adding the evaluation parameter P1 and an evaluation parameter P2 obtained from a variable angle reflected light distribution in the azimuth angle direction at a ratio corresponding to the evaluation parameter P1. The reflection characteristic of an object surface 20 is obtained based on the evaluation parameter P3.

In this embodiment, steps S102 and S103 of the flowchart shown in Fig. 4 are different from the first embodiment in the flowing points. In the first embodiment, in step S102, the generation unit 165 obtains the one-dimensional intensity distribution (variable angle reflected light distribution) in the azimuth angle direction from one or more horizontal lines of the two-dimensional element array. In this embodiment, the one-dimensional intensity distribution (variable angle reflected light distribution) in the reflection angle direction is obtained from one or more vertical lines of the two-dimensional element array, in addition to the variable angle reflected light distribution in the azimuth angle direction. The method of obtaining the variable angle reflected light distribution in the reflection angle direction from one or more vertical lines of the two-dimensional element array is the same as the method of obtaining the variable angle reflected light distribution in the azimuth angle direction from one or more horizontal lines of the two-dimensional element array.

For example, a generation unit 165 may acquire an element value array on one arbitrary vertical line (for example, the vertical line at the center or one vertical line near the center) of the two-dimensional element array as "the variable angle reflected light distribution in the reflection angle direction". Alternatively, for example, the generation unit 165 may acquire the average of the element value arrays of the vertical lines of the two-dimensional element array as "the variable angle reflected light distribution in the reflection angle direction". Alternatively, for example, the generation unit 165 may acquire the sum of the element value arrays of the vertical lines of the two-dimensional element array as the "the variable angle reflected light distribution in the reflection angle direction". When obtaining the above-described average value or sum, the above-described average value or sum may be obtained using every other L (L is an integer of 1 or more) horizontal lines, instead of using all horizontal lines. Alternatively, the weighted average of element values may be obtained for each horizontal line by, for example, adding a large weight to the center of the two-dimensional element array.

In step S103 according to this embodiment, an extraction unit 166 obtains the evaluation parameter P1 from the variable angle reflected light distribution in the reflection angle direction and also obtains the evaluation parameter P2 from the variable angle reflected light distribution in the azimuth angle direction. The method of obtaining the evaluation parameter from the variable angle reflected light distribution is the same as in the first embodiment no matter whether it is the variable angle reflected light distribution in the reflection angle direction or the variable angle reflected light distribution in the azimuth angle direction.

Then, in step S103, the extraction unit 166 obtains the evaluation parameter P3 by adding the evaluation parameter P1 and the evaluation parameter P2 at a ratio R corresponding to the evaluation parameter P1. For example, assume that the evaluation parameters P1 and P2 are standard deviations. At this time, for example, when 0.1 ≤ P1 < α (> 0.1), R = 1 is defined, when α ≤ P1 < β (> α), R = (P1 - β)/(α - β) is defined, and when β ≤ P1, R = 0 is defined. The evaluation parameter P3 is obtained by calculating P3 = R × P1 + (1 - R) × P2. The relationship between the ratio R and the evaluation parameter P1 is not limited to this example. In addition, the ratio R may be decided in accordance with the evaluation parameter P2. If an existing standard index value such as a specular glossiness, a haze, or a DOI is simultaneously measured, the ratio R may be decided in accordance with the magnitude of the standard index value.

Alternatively, whether to use the evaluation parameter P1 or the evaluation parameter P2 as the evaluation parameter P3 may be switched based on a threshold such that P3 = P1 is used when P1 < α, and P3 = P2 is used when α ≤ P1. As the target to be compared with α, P2 or the magnitude of the standard index value may be used in place of P1.

Alternatively, whether to use the evaluation parameter P1 or the evaluation parameter P2 as the evaluation parameter P3 may be decided by operating an operation unit 15 by the user. This operation may be performed before the start of the processing according to the flowchart of Fig. 4 or may be performed in step S103.

In step S104, a calculation unit 167 obtains the reflection characteristic (reflection characteristic evaluation value) of the object surface 20 from the evaluation parameter P3 obtained by the extraction unit 166 in step S103. Note that the reflection characteristic of the object surface 20 may be obtained from each of the evaluation parameter P1 and the evaluation parameter P2 without obtaining the evaluation parameter P3.

Setting items such as a method of obtaining P3, a function (table) representing the relationship between P1 (P2 or standard index value) and the ratio R, a threshold, and whether or not to obtain the reflection characteristic of the object surface 20 from each of P1 and P2 without obtaining P3 are set in advance and stored in a storage unit 162. In addition, the above-described function, threshold, and the like may be edited by displaying a GUI (Graphical User Interface) used to edit these on a display unit 14 and operating the operation unit 15 by the user.

As described above, according to this embodiment, it is also possible to evaluate the reflection characteristic in consideration of a case in which the two-dimensional shape of the two-dimensional BRDF is not isotropic (that is, a case in which the two-dimensional BRDF has anisotropy).

### [Third Embodiment]

In step S102 according to this embodiment, a generation unit 165 obtains a one-dimensional intensity distribution (variable angle reflected light distribution) from one line other than the vertical lines and the horizontal lines of a two-dimensional element array output from a sensor 12d in step S101. "One line other than the vertical lines and the horizontal lines" is, for example, one line in an oblique direction with respect to the vertical lines (horizontal lines) of the two-dimensional element array. In step S102 according to this embodiment, for example, an element value array formed by the element values of elements on a line that connects the element at the upper left corner (upper right corner) of the two-dimensional element array and the element at the lower right corner (lower left corner) is acquired as the variable angle reflected light distribution. Processing from step S103 is the same as in the first embodiment.

### [Fourth Embodiment]

In the third embodiment, the element value array of one line other than the vertical lines and the horizontal lines of the two-dimensional element array is acquired. However, to achieve the same object, a sensor 12d may be arranged while being rotated by a predetermined angle γ about an axis passing through the center position of the sensor surface (the light receiving surface of reflected light) of the sensor 12d in a direction perpendicular to the sensor surface. In the third embodiment, to acquire the element value array of elements on a line obtained by rotating a horizontal line by the angle γ about the center of the two-dimensional element array, it is necessary to obtain the positions of the elements on the line obtained by rotating the horizontal line by the angle γ about the center of the two-dimensional element array. However, according to this embodiment, the element value array on the line obtained by rotating the horizontal line by the angle γ about the center of the two-dimensional element array before the rotation can be acquired only by acquiring the element value array of the horizontal line of the two-dimensional element array. This facilitates acquisition of the element value array of the line in the oblique direction, as compared to the third embodiment.

### [Fifth Embodiment]

A driving unit configured to move a sensor 12d to an arbitrary position in an incident surface about the regular reflection angle of reflected light may be provided in a reflection characteristic measurement apparatus 10, thereby receiving the reflected light in a wider range.

In addition, for each of lines in a plurality of directions passing through the center of the two-dimensional element array, an evaluation parameter may be obtained from the element value array on the line in accordance with the same procedure as in the first embodiment, and one evaluation parameter satisfying a condition in the obtained evaluation parameters may be decided. For example, if the evaluation parameter is a standard deviation, the "condition" is that "the standard deviation is equal to or less than a predetermined value". The decision processing of the evaluation parameter also serves as decision processing of a direction in which the evaluation parameter satisfies the condition. Note that information (for example, an angle) that defines the direction decided as the direction in which the evaluation parameter satisfies the condition may be stored in a storage unit 162 as information to be notified to the user or information to be notified to another apparatus when the user places the reflection characteristic measurement apparatus 10 on an object surface 20 next time. Note that the application purpose of the stored information is not limited to a specific application purpose. Then, the specified evaluation parameter is used in the first to fourth embodiments.

### [Sixth Embodiment]

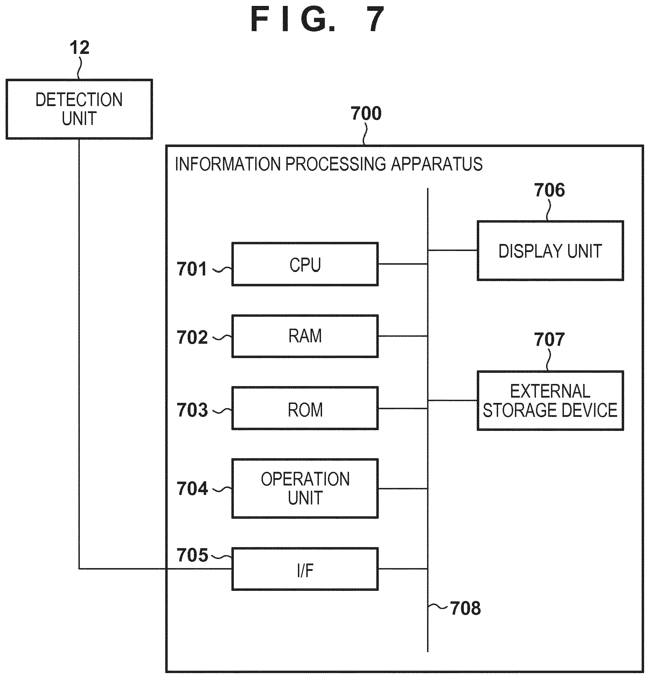

In the first to fifth embodiments, only the reflection characteristic measurement apparatus 10 irradiates the object surface 20 with incident light and acquires the two-dimensional intensity distribution representing the intensity distributions of reflected light from the object surface 20 in the reflection angle direction and the azimuth angle direction. Then, only the reflection characteristic measurement apparatus 10 obtains the reflection characteristic of the object surface 20 based on the intensity distribution in a predetermined direction different from the reflection angle direction in the two-dimensional intensity distribution. However, the detection unit 12 that acquires the two-dimensional element array and an information processing apparatus for obtaining the reflection characteristic of the object surface 20 from the two-dimensional element array by the detection unit 12 may be separate devices. An example of the arrangement of a system according to this embodiment will be described with reference to the block diagram of Fig. 7.

As shown in Fig. 7, the system according to this embodiment includes a detection unit 12, and an information processing apparatus 700 that obtains the reflection characteristic of an object surface 20 from a two-dimensional element array by the detection unit 12. The detection unit 12 and the information processing apparatus 700 are configured to be able to perform data communication via a cable. Note that the connection form between the detection unit 12 and the information processing apparatus 700 is not limited to a cable and may be wireless. In addition, the detection unit 12 and the information processing apparatus 700 may be connected via one or more devices.

The detection unit 12 will be described first. The detection unit 12 includes a light source control circuit 12c, a light source 12a, a lens 12b, a lens 12e, and a sensor 12d shown in Fig. 2, as described above, and operates upon receiving a measurement start instruction from the information processing apparatus 700. The sensor 12d outputs the above-described two-dimensional element array to the information processing apparatus 700.

The information processing apparatus 700 will be described next. The information processing apparatus 700 is a device such as a PC (personal computer), a tablet terminal device, or a smartphone. The information processing apparatus 700 sends a measurement start instruction to the detection unit 12, and obtains the reflection characteristic of the object surface 20 based on the two-dimensional element array output from the detection unit 12 in accordance with the start instruction.

A CPU 701 executes processing using a computer program and data stored in a RAM 702 or a ROM 703. The CPU 701 thus controls the operation of the entire information processing apparatus 700 and also executes or controls each processing described above as processing performed by a control unit 16.

The RAM 702 has an area to store the two-dimensional element array received from the detection unit 12 via an I/F (interface) 705 or a computer program and data loaded from the ROM 703 or an external storage device 707. In addition, the RAM 702 has a work area used when the CPU 701 executes various kind of processing. In this way, the RAM 702 can appropriately provide various kinds of areas. The ROM 703 stores a computer program and data such as a computer program and data of a BIOS, which are need not be rewritten.

An operation unit 704 is formed by a user interface such as a keyboard or a mouse, and the user can input various kinds of instructions to the CPU 701 by operating the operation unit 704. For example, the user can input the above-described measurement start instruction by operating the operation unit 704.

The I/F 705 functions as an interface configured to perform data communication with the detection unit 12. The above-described measurement start instruction is sent to the detection unit 12 via the I/F 705, and the two-dimensional element array measured and acquired by the detection unit 12 in accordance with the start instruction is received from the detection unit 12 via the I/F 705.

A display unit 706 is formed by a CRT, a liquid crystal screen, or the like, and can display the processing result of the CPU 701 by an image or characters. For example, the display unit 706 can display various kinds of information described as information displayed by the above-described display unit 14. Note that the operation unit 704 and the display unit 706 may be integrated to form a touch panel screen.

The external storage device 707 is a mass information storage device represented by a hard disk drive. An OS (Operating System) and computer programs and data configured to cause the CPU 701 to execute each processing described above as processing performed by the above-described control unit 16 are saved in the external storage device 707. The computer programs saved in the external storage device 707 include computer programs configured to cause the CPU 701 to execute the functions of functional units including a display control unit 161, a communication control unit 164, a generation unit 165, an extraction unit 166, and a calculation unit 167 shown in Fig. 3. In addition, the data saved in the external storage device 707 include data handled as known information (a threshold, setting information, setting items, and the like) in the above explanation. The computer programs and data saved in the external storage device 707 are appropriately loaded into the RAM 702 under the control of the CPU 701 and processed by the CPU 701. All the CPU 701, the RAM 702, the ROM 703, the operation unit 704, the I/F 705, the display unit 706, and the external storage device 707 are connected to a bus 708.

### [Seventh Embodiment]

In this embodiment, a machining system including a machining apparatus for performing machining of an object surface, and a reflection characteristic measurement apparatus (the reflection characteristic measurement apparatus according to one of the above-described embodiments) for obtaining the reflection characteristic of the object surface that has undergone the machining will be described. In this machining system, if the reflection characteristic of the object surface obtained by the reflection characteristic measurement apparatus does not fall within a desired range, the machining apparatus performs re-machining of the object surface.

Some or all of the above-described embodiments and modifications may appropriately be combined. In addition, some or all of the above-described embodiments and modifications may selectively be used.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

A two-dimensional intensity distribution representing intensity distributions of reflected light from an object surface in a reflection angle direction and an azimuth angle direction is acquired. A reflection characteristic of the object surface is obtained based on an intensity distribution in a predetermined direction different from the reflection angle direction in the two-dimensional intensity distribution.

## Claims

1. A reflection characteristic measurement apparatus comprising:
acquisition means for acquiring a two-dimensional intensity distribution representing intensity distributions of reflected light from an object surface in a reflection angle direction and an azimuth angle direction; and
obtaining means for obtaining a reflection characteristic of the object surface based on an intensity distribution in a predetermined direction different from the reflection angle direction in the two-dimensional intensity distribution.

2. The apparatus according to claim 1, wherein the acquisition means comprises:
a light source configured to irradiate the object surface with incident light; and
light receiving means for receiving the reflected light from the object surface, thereby acquiring the two-dimensional intensity distribution representing the intensity distributions of the reflected light from the object surface in the reflection angle direction and the azimuth angle direction.

3. The apparatus according to claim 1, wherein the acquisition means acquires the two-dimensional intensity distribution from an external sensor comprising:
a light source configured to irradiate the object surface with incident light; and
light receiving means for receiving the reflected light from the object surface, thereby acquiring the two-dimensional intensity distribution representing the intensity distributions of the reflected light from the object surface in the reflection angle direction and the azimuth angle direction.

4. The apparatus according to claim 2 or 3, wherein the light receiving means tilts about an axis passing through a center position of the light receiving means in a direction perpendicular to the light receiving means.

5. The apparatus according to claim 2 or 3, wherein the light receiving means can move in an incident surface about a regular reflection angle of the reflected light.

6. The apparatus according to any one of claims 1 to 5, wherein the obtaining means obtains the reflection characteristic of the object surface based on one one-dimensional intensity distribution in the predetermined direction in the two-dimensional intensity distribution.

7. The apparatus according to any one of claims 1 to 5, wherein the obtaining means obtains the reflection characteristic of the object surface based on an average of a plurality of one-dimensional intensity distributions in the predetermined direction in the two-dimensional intensity distribution.

8. The apparatus according to any one of claims 1 to 5, wherein the obtaining means obtains the reflection characteristic of the object surface based on a sum of a plurality of one-dimensional intensity distributions in the predetermined direction in the two-dimensional intensity distribution.

9. The apparatus according to any one of claims 1 to 3, wherein the obtaining means obtains the reflection characteristic of the object surface based on the intensity distribution in the reflection angle direction in the two-dimensional intensity distribution and the intensity distribution in the predetermined direction in the two-dimensional intensity distribution.

10. The apparatus according to any one of claims 1 to 9, wherein the predetermined direction is a direction different from the reflection angle direction and the azimuth angle direction.

11. A machining system comprising:
a machining apparatus configured to perform machining of an object surface; and
a reflection characteristic measurement apparatus configured to obtain a reflection characteristic of the object surface that has undergone the machining,
wherein the reflection characteristic measurement apparatus comprises:
acquisition means for acquiring a two-dimensional intensity distribution representing intensity distributions of reflected light from the object surface in a reflection angle direction and an azimuth angle direction; and
obtaining means for obtaining the reflection characteristic of the object surface based on an intensity distribution in a predetermined direction different from the reflection angle direction in the two-dimensional intensity distribution.

12. A reflection characteristic measurement method comprising:
acquiring a two-dimensional intensity distribution representing intensity distributions of reflected light from an object surface in a reflection angle direction and an azimuth angle direction; and
obtaining a reflection characteristic of the object surface based on an intensity distribution in a predetermined direction different from the reflection angle direction in the two-dimensional intensity distribution.

13. A machining method for an object, comprising:
performing machining of an object surface; and
performing measurement using a reflection characteristic measurement method to obtain a reflection characteristic of the object surface that has undergone the machining,
wherein in the reflection characteristic measurement method,
a two-dimensional intensity distribution representing intensity distributions of reflected light from the object surface in a reflection angle direction and an azimuth angle direction is acquired, and
the reflection characteristic of the object surface is obtained based on an intensity distribution in a predetermined direction different from the reflection angle direction in the two-dimensional intensity distribution.

14. The method according to claim 13, wherein if the reflection characteristic of the object surface does not fall within a desired range as a result of the measurement, re-machining of the object surface is performed.

15. Anon-transitory computer-readable storage medium storing a computer program configured to cause a computer to function as:
acquisition means for acquiring a two-dimensional intensity distribution representing intensity distributions of reflected light from an object surface in a reflection angle direction and an azimuth angle direction; and
obtaining means for obtaining a reflection characteristic of the object surface based on an intensity distribution in a predetermined direction different from the reflection angle direction in the two-dimensional intensity distribution.
